# EUROPEAN PATENT SPECIFICATION

(11) **EP 0 542 797 B1**
(45) Date of publication and mention of the grant of the patent: **05.06.1996**
(21) Application number: 91913865.1
(22) Date of filing: 02.08.1991
(51) Int. Cl.: B01D 53/10, B01D 53/12

(54) **GAS-SOLID CONTACTING METHOD**
METHODE ZUR GAS-FESTSTOFF-KONTAKTIERUNG
PROCEDE DE MISE EN CONTACT D'UN GAZ ET D'UN SOLIDE

(30) Priority: 03.08.1990 AU 1558/90
(43) Date of publication of application: 26.05.1993
(73) Proprietor: COMALCO ALUMINIUM, LTD., Melbourne, Victoria 3000 (AU)
(72) Inventor: GOODES, Christopher, Geoffrey, Mill Park, VIC 3082 (AU); WELLWOOD, Grant, Ashley, Mill Park, VIC 3082 (AU); KJAR, Anthony, Rudland, Blackburn, VIC 3130 (AU); STILL, Robert, Francis, East Malvern, VIC 3144 (AU)
(74) Representative: Hallybone, Huw George
(86) International application number: AU9100342
(87) International publication number: WO9202289

(56) References cited:
- AU-A- 3 416 071
- AU-A- 5 908 973
- AU-A- 7 752 575
- US-A- 4 065 271

## Description

This invention relates to the treatment of exhaust gas streams and in particular the removal of a gaseous component of such streams by solid contact.

An Example of a gaseous component in a gas stream which may be removed by solid contact is found in the electrolytic production of aluminium. Gaseous fluorides and particularly hydrogen fluoride are present in a potline exhaust gas as an inevitable consequence of the smelting process. If vented to the atmosphere these gases represent a net loss of fluorides from the process which is important from an economical point of view. Minimizing the fluoride release is also important from an environmental point of view.

Gaseous fluorides are presently removed from exhaust gases by a dry scrubbing technique. This involves contacting the raw potline exhaust gas with alumina particles and the gaseous fluorides are chemisorbed and/or physisorbed onto the surface of the alumina. The alumina is then collected in a baghouse, together with any entrained particulates originally in the exhaust gas.

In such dry scrubbing techniques, primary contact between the alumina and the exhaust gas can take place in two types of reactors - one type being known as a transport reactor.

In a transport reactor, the primary alumina is injected into a low to moderate velocity gas stream before being separated. The particulates are injected into the gas stream for the purpose of entraining the particles and so the velocity of the particulates relative to the gas stream is small.

Although such reactors are very simple, they are relatively inefficient gas-solid contactors and a recycle (up to 20 times) is generally employed to achieve the desired scrubbing. The high recycle, results in a high attrition of the alumina particles due to excessive handling and as particle size is an important parameter in aluminium pot feeds, control problems in that pot may arise because of excessive fines. In this type of reactor, the high recycle rate also results in a high proportion of the alumina used in fluoride sorption being carried to the baghouse resulting in a high solids loading in the baghouse.

Furthermore, a high recycle rate makes predicting and controlling the rate of fluoride sorption onto the alumina difficult.

The other type of reactor uses a conventional fluidized bed system. Such a system involves large initial capital costs and because of the large pressure drop across the bed, a high operating cost can be expected.

In both types of reactor, all the alumina is ultimately fed to the cell and so the impurities (carbon, trace metals and other particulates in the exhaust gases) are also recycled to the electrolytic cell.

With both of these systems, in practice, it has been found that a large proportion (usually 100%) of the feed inventory for the electrolytic cell must be contacted with the exhaust gas stream to effectively reduce the fluoride concentration to a respectable level. As a result of the impurities in the gas stream the overall quality of the feed is reduced.

It is an object of this invention to improve the efficiency of the gas-solid contact, so that a smaller proportion of the alumina inventory can be used to reduce the fluoride levels in the potline exhaust gas.

The objectives of any dry scrubbing operation is to adsorb or chemisorb the gaseous contaminants in an exhaust gas stream onto particulate material at the highest possible rate and attain the highest possible loading of contaminant on that particulate material. From a commercial point of view, this should be done by minimizing the operating costs associated with the contacting of gas and solid.

It has been found that gas phase mass transfer coefficient and hence mass transfer rate is very much dependent on the resistance to mass transfer of the diffusion boundary layer around the particle. If the boundary layer is reduced considerably by a high slip velocity (relative velocity between particle and gas in the reaction zone) the mass transfer is then dependent on the adsorption or chemisorption rate at the particle surface. Generally, this results in the mass transfer proceeding at a much faster rate. Therefore, for a relatively short residence time, the adsorption process can substantially reach equilibria with the particulate material approaching its saturation limit for the gaseous component, before being removed. Consequently, less particulate material is required to handle the same loadings in the gas phase.

It has been found that if the particulate material is contacted with a high velocity exhaust gas stream, so that the slip velocity in the reaction zone is higher than that found in prior art reactors the effect of diffusion to the particle surface is minimized and its contribution to the overall rate of sorption is negligible.

AU-B-470782 describes a process for removing hydrogen fluoride from gases by contacting the gases with a solid adsorbent in a fluidised bed. The process uses a circulating fluidised bed reactor, in which the gas stream being treated forms the fluidising gas for the fluidised bed. The fluidising gas preferably has a velocity of 1 to 5 metres per second. The gas exiting the fluidised bed is treated to remove part of the entrained finer particulate material, which is substantially returned to the bed. Coarser particulate material is removed from the bottom of the bed.

US-A-4065271 describes a process for separating hydrogen fluoride from gases. The process is substantially similar to that of AU-B-0470782, but the fluidising gas exiting the fluidised bed reactor is treated in a series of electrostatic precipitators to remove entrained particles. The heavier particle fractions are recycled into the fluidised bed or into an aluminium smelter cell. The lighter entrained particles containing higher levels of impurities are discharged.

The present invention provides a process of scrubbing a gaseous component from a gas stream, comprising the steps of providing a high velocity gas stream to a reaction zone, said gas stream entering from beneath said reaction zone, contacting said high velocity gas stream in said reaction zone with a particulate material capable of adsorbing or chemisorbing the gaseous component, said particulate material entering said reaction zone in a direction such that the particulate material has a downward component of velocity, and removing and recovering a coarse fraction of the particulate material from the reaction zone, characterized in that the reaction zone is toroidal and the gas stream entering the reaction zone is imparted with an upward circumferential motion, such that the slip velocity in the reaction zone of the gas stream relative to the particulate material is greater than 1 metre per second and a fine fraction of the particulate material is elutriated from the coarse fraction of the particulate material by the gas stream, the fine fraction being entrained in the gas stream and exiting the reaction zone with the gas stream and the fine fraction then being recovered from the gas stream to thereby separate the fine fraction from the course fraction.
Preferably, the coarse fraction of particulate material is removed axially downwardly from the reaction zone.

Preferably, prior to the scrubbing operation substantially all of the solid material is removed from the gas stream.

Preferably the particulate material is alumina and the gaseous component is gaseous fluorides.

It has further been found that proportionally, treated fine particulate material (preferably less than 45 µm) contains a larger amount of trace metals than treated coarser particles. Thus the compounding effect of adding impurities in the treated alumina used as feed, can be reduced if the finer particles are elutriated from the treated coarser alumina particles.

This has additional benefits as the fine material causes occupational health problems for people working in the vicinity of the smelter pots.

Thus, according to the invention a fine fraction of particulate material is elutriated from a coarse fraction by said gas stream. The fine fraction of particulate material is entrained by the gas stream and exits the reaction zone with the gas stream. The coarse fraction is recovered by removal through a conduit, beneath said reaction zone and initially extending axially from said reaction zone

This process has the advantage that only the fine fraction is carried over with the gas stream to the baghouse thus reducing the solids loading on the bag filter and reducing the cost of operating such equipment. Moreover, the fine particles with a high concentration of such impurities as trace metals, are removed from the system or can be treated separately.

If the impurity level in the treated alumina is to be reduced further, it is preferable that substantially all the solids in the exhaust gas stream be removed prior to contact with the sorbing particulate material.

The contacting process is carried out in an apparatus with a toroidal reaction zone with the gas stream entering from beneath the reaction. The entering exhaust gas stream preferably enters the bottom of the reaction zone at an angle inclined to the axis of the toroid such that the gas stream is imparted with a circumferential motion about said axis as it progresses through the reaction zone. In this way a high velocity gas stream may be accommodated in a relatively compact zone.

As the gas stream is of a high velocity the resulting slip velocity of the gas stream relative to the particulate material is greater than 1 m/s, the boundary layer is minimized and the reaction takes place rapidly on the surface of the material. Thus very little contact time is required for the particulate material to reach equilibria.

The treated coarse fraction of particulate material is taken off after a predetermined residence time and the fine material is allowed to be carried over with the gas stream.

The foregoing and other features objects and advantages of the present invention will become more apparent from the following description of the preferred embodiments and accompanying drawings in which:
FIGURE 1 is a process flow diagram of a dry scrubbing system incorporating an embodiment of the process of the invention,
FIGURE 2 is a schematic view of an apparatus for carrying out an embodiment of the process of the invention,
FIGURE 3 is a schematic diagram showing the relative velocities (U_{g}, Uₚ) of the gas stream and a particle in the reaction zone,
FIGURE 4 is a sectional perspective view of an apparatus for carrying out the process in accordance with an embodiment of the invention,
FIGURES 5 to 7 are schematic diagrams illustrating the diminishing of the diffusion boundary layer around the particle as the slip velocity increases,
FIGURE 8 is a graph showing the effect slip velocity has on mass transfer rate and the relative improvement in the reaction rate, and
FIGURES 9, 10, 11 and 12 are graphs showing the amounts of iron, vanadium, nickel and gallium, respectively, adsorbed or chemisorbed onto alumina as a function of particle size.

The scrubbing process of the present invention will now be described with reference to the removal of fluorides and trace metals such as vanadium, nickel, gallium and iron from the exhaust gases of an aluminium refining cell.

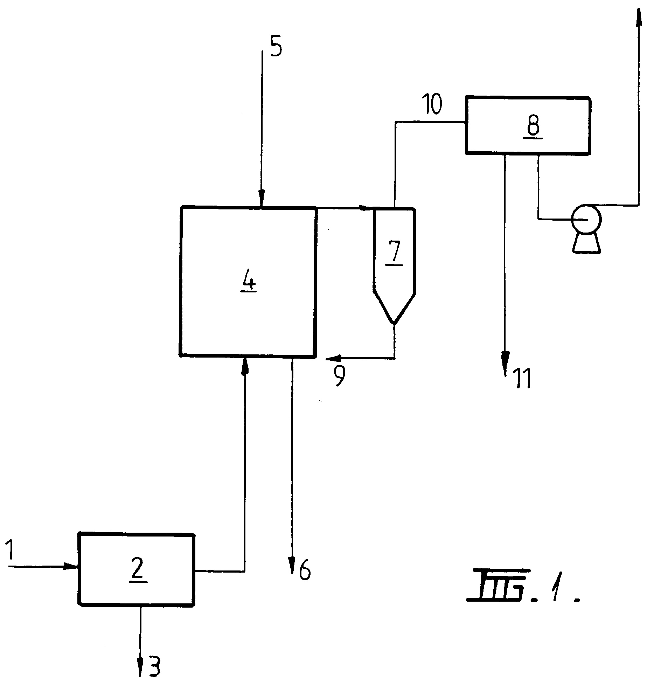

In the overall process flow diagram shown in Figure 1, the raw cell exhaust gas 1 is first passed through a solids removal stage 2 to remove, as stream 3, any particular material such as silica, alumina or carbon which may be entrained in the gas stream. This stage can be series of cyclones or multi-clones or other dust separation devices.

The gas stream is then passed to the reactor 4 where fluorides and trace metals are adsorbed or chemisorbed onto the surface of the primary alumina 5. A coarse fraction 6 of treated alumina is then removed and mixed with the feed to an aluminium refining or smelting operation. A finer fraction may then be carried with the gas stream through a baffle 7 to separate the larger of the entrained particles before being passed to the baghouse 8. The larger particles 9 in the fine fraction may be returned to the reactor and the remainder 10 are passed to the baghouse for separation from the gas stream as particle stream 11. The particles removed at stream 11 generally have a particle size less than about 45 µm, preferably less than about 20 µm and most preferably less than about 10 µm.

If sufficient control can be maintained over the size of the particles removed from the reactor as a fine fraction, then a baffle system may not be required.

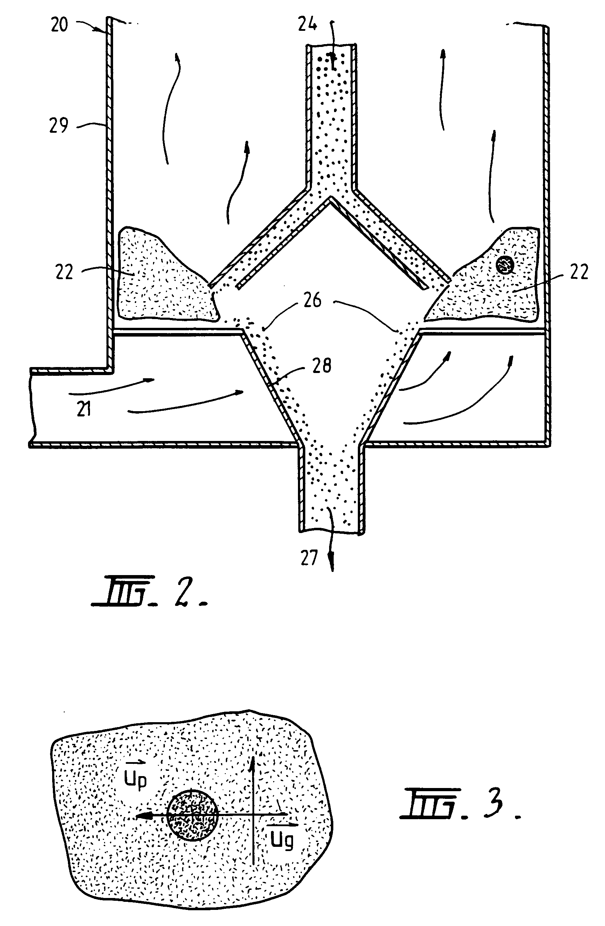

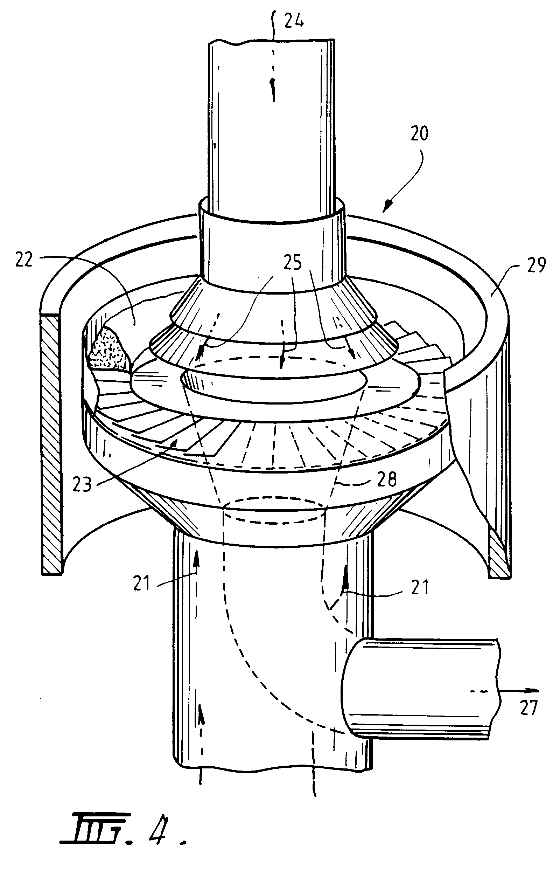

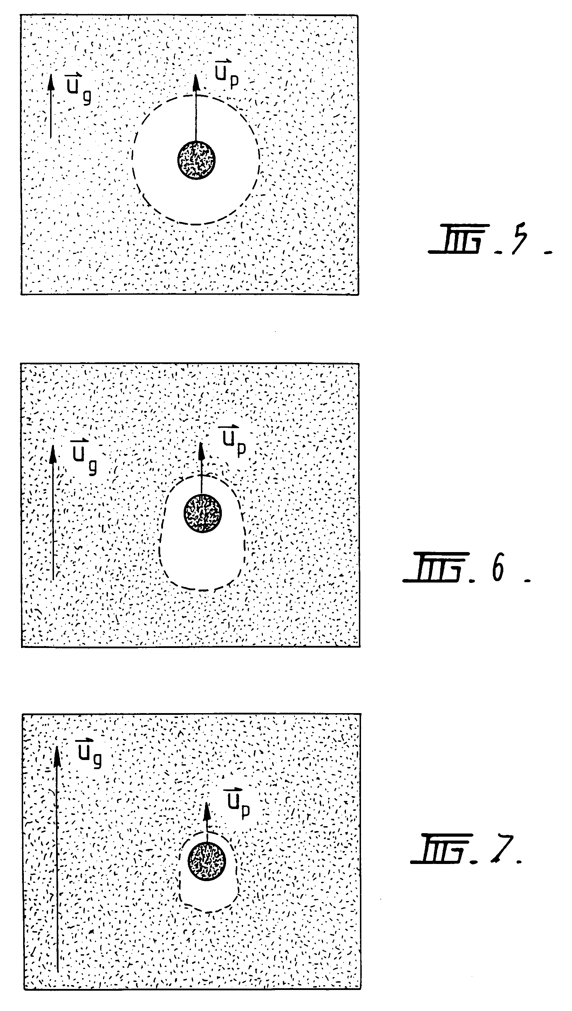

In the apparatus 20 for carrying out the process of the invention as shown in Figures 2 and 4, a fluoride containing exhaust gas stream 21 enters the reactor in the direction of the arrows shown. The bottom of a toroidal reaction zone 22 comprises a number of intake guides 23 which direct the incoming high velocity exhaust gases in a direction at least 80° to the access of the reaction zone so that the gases move in a direction which is substantially circumferential to the reaction zone 22. The gases thus create a swirling motion in the processing zone of the reactor 20 about the axis of the reaction zone 22.

Alumina is fed into the reactor in a countercurrent direction via axial conduit 24 which has a diverging conical feeder to provide a uniform distribution of particulate material in the gas stream before entering the toroidal reaction zone at 25.

As the particles are contacted with the gas flow, the swirling motion of the gas stream and the slip velocity of the gas stream relative to the particles causes a shearing or disruption of the diffusion boundary layer as discussed later. The particles initially are moved to the outside of the reaction zone 22 by centrifugal force but as more particles are fed into the reactor, the reaction zone fills and the treated particles are forced to the inside of the reaction zone. The treated particles which have completed the sorption process are taken from the reactor via conduit 28 as stream 26, 27 to be mixed with the refining cell or smelter pot feed.

The walls of the reactor 29 can extend upwardly from those shown in Figure 4 and taper outwardly (not shown) to keep the finer particles entrained until processed as in Figure 1.

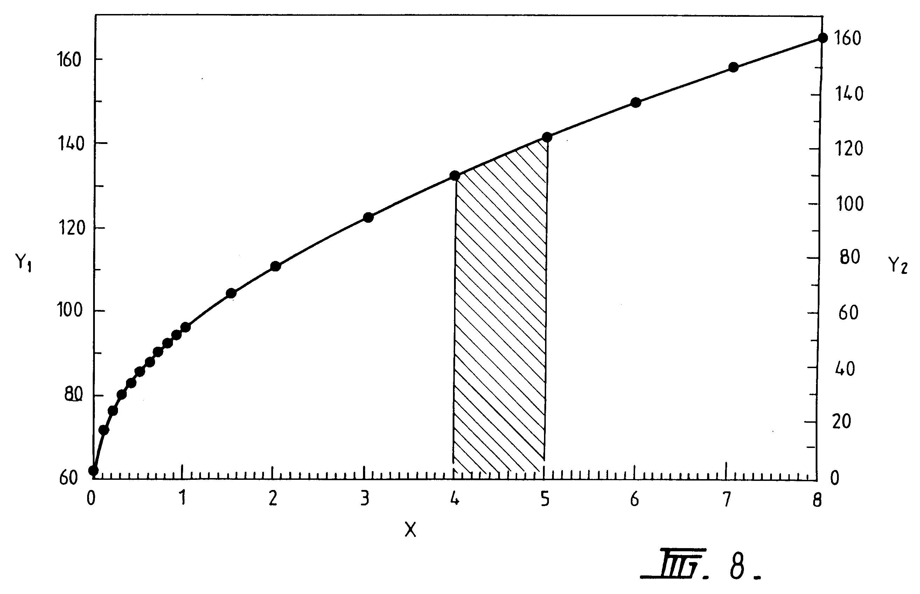

As discussed earlier, when the alumina particles enter the reaction zone, the difference between the velocity of the particles and the velocity of the gas known as the slip velocity is large enough to shear or disrupt the surrounding diffusion boundary layer around the particle. This is illustrated in Figures 5, 6 and 7.

In Figure 5, the velocity of the particle (Uₚ) is roughly the same as the gas velocity (U_{g}). This results in a slip velocity approaching zero and corresponds to a scrubbing operation performed in a transport reactor. As can be seen in the drawing, the diffusion boundary layer is large and as a consequence high gas phase resistance results.

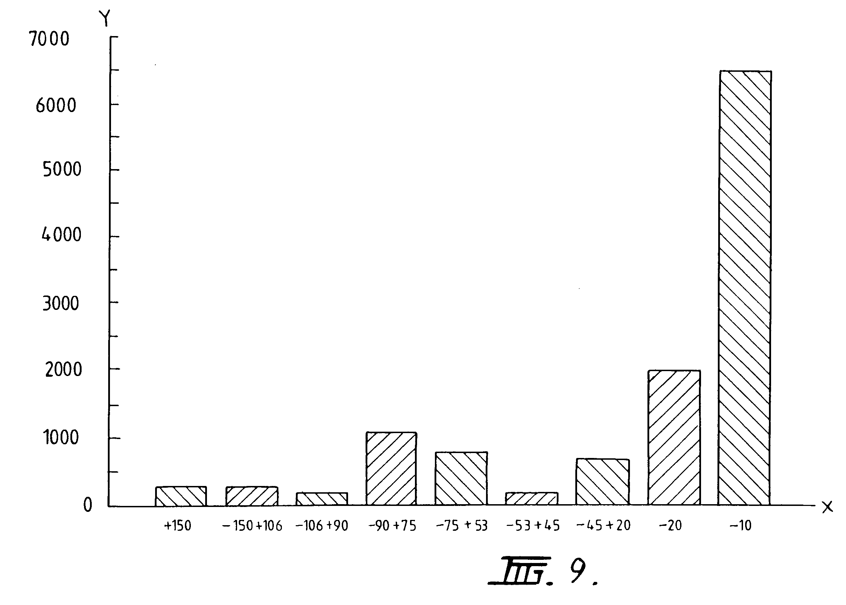

In Figure 6 the slip velocity has increased resulting in a lower diffusion boundary layer resistance and faster gas phase mass transfer. This situation is analogous to a fluidized bed reactor and although improving the scrubbing operation, the higher capital and operating costs detract considerably from the appeal of this type of reactor.

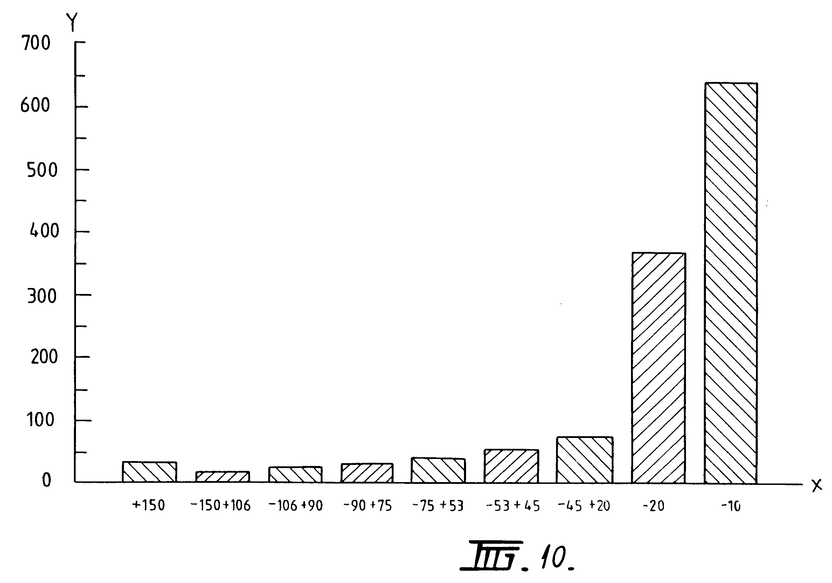

When the gas velocity (U_{g}) is much greater than the particle velocity (Uₚ) as shown in Figure 7, the boundary layer diffusion resistance is greatly reduced. The particles which have a substantially zero velocity in the direction of gas flow and a slip velocity above about 1 metre per second provide sufficiently low resistance to gas phase mass transfer to achieve effective gas scrubbing. Although the velocity of the gas may not be large enough to remove all the boundary layer, a sufficient amount of the boundary layer is removed or disrupted so that the contribution of the rate of diffusion of fluorides to the particle in the overall reaction rate is greatly reduced. Thus the rate determining step in the overall reaction is the adsorption or chemisorption of the fluorides on to the surface of the alumina.

As the reaction between fluorides and alumina is both rapid and complete, the contact with alumina can be conducted in a single pass. To handle the large volumes of exhaust gas produced in an aluminium smelter, it is likely that a bank of reactors can be set up in parallel. A typical dry scrubbing operation of gaseous fluorides from smelter pot exhaust gas must be capable of handling 2 - 3 x 10⁶ m³/hr with a concentration of 100-400 ppmHF.

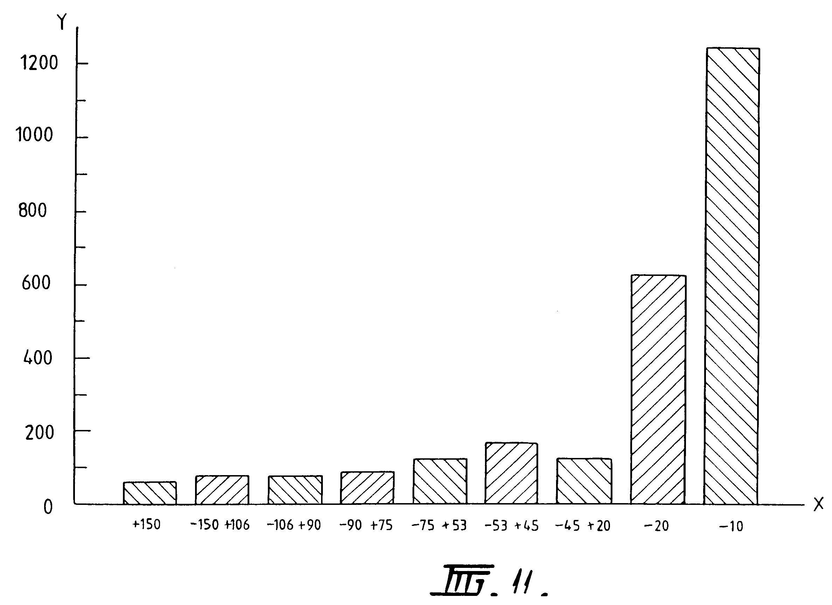

Figure 8 is a graph of slip velocity in m/s on the X axis, mass transfer co-efficient in centimeters per second on the Y1 axis and percentage relative improvement in reaction rate on the Y2 axis.

A fluidized bed gas scrubber has a slip velocity of typically 0.6 m/s whereas a transport reactor has slip velocity of less than 0.1 m/s. Therefore the benefits in operating at a slip velocity of greater than 1 m/s are clearly evident from Figure 8.

For gas scrubbing operations carried out in accordance with the invention in a toroidal reaction zone, slip velocities between preferably 4 to 5 m/s can be used with the consequent increase in scrubbing efficiency. As discussed earlier, by using a toroidal reaction zone, the apparatus can be operated to allow a fine fraction of the alumina to be carried over with the gas stream for later recovery. Furthermore, the pressure drop across a toroidal reaction zone of 1 m diameter is 98 - 294 N/m² (10 - 30 mm H₂O) which is an order of magnitude less than a corresponding fluidized bed gas scrubber.

It has been found by the present applicants that a fine fraction of less than 45 µm adsorbs or chemisorbs a disproportionate amount of, in particular, trace metals.

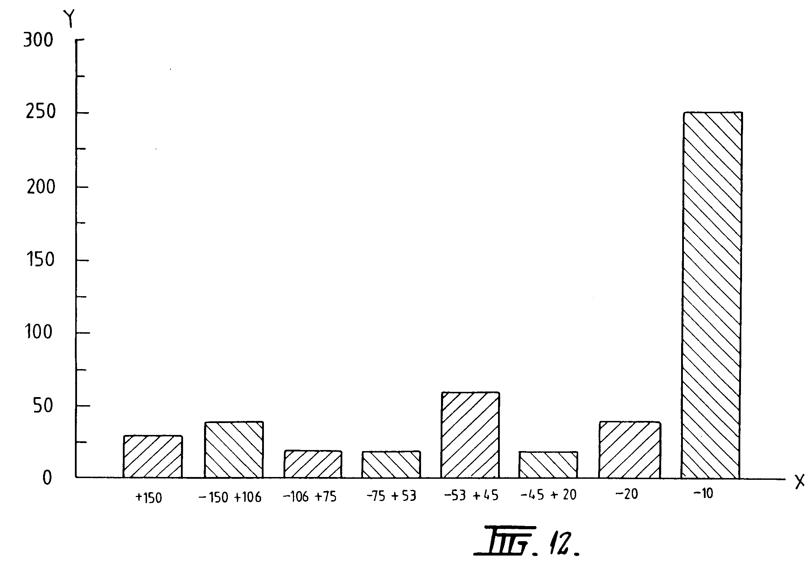

Figures 9, 10, 11 and 12 illustrates the sorption of iron vanadium, nickel and gallium, respectively, in parts per million (Y axis) as a function of particle size (X axis).

In the adsorption or chemisorption of gaseous fluorides from the exhaust gas of an aluminium refining cell onto alumina, both the fluorides and treated alumina are used as feeds for the refining cell. Trace metals such as gallium, nickel, iron and vanadium are considered contaminants and due to their presence in the exhaust gas are adsorbed or chemisorbed onto the alumina simultaneously with the gaseous fluorides.

To prevent these trace metals being returned to the refining cell with the treated alumina, the fine fraction which has a disproportionately higher fraction of trace metals, is recovered and not used as feed for the refining cell. From Figures 9 to 12 it is evident that the less than 10 µm fraction has the largest proportion of trace metals but it can be seen that benefits can be gained by separating a fine fraction of up to 45 µm.

Table 1 shows the reduction in impurity levels which were obtained by removal of alumina with a particle size of 20 µm and alumina with a particle size of less than 45 µm.

**TABLE 1**

| Element | Size Fraction Removed (µm) | Wt% Alumina | % Impurity Removed |
|---|---|---|---|
| V | -20 | 20 | 47 |
| | -45 | 25 | 55 |
| Ni | -20 | 20 | 53 |
| | -45 | 25 | 60 |
| Fe | -20 | 20 | 17 |
| | -45 | 25 | 20 |

It can be seen that the benefits of separating the fine fraction are most noticeable with respect to vanadium and nickel.

While the invention has been described mainly in terms of the removal of gaseous fluorides from aluminium cell exhaust gases by contact with alumina, it should be readily understood by those skilled in the art that the process of the invention is equally applicable to other gas scrubbing or gas solid contacting applications which are dependent on the rate of diffusion to the adsorbing or chemisorbing particle. For example, a further application may be in the desulphurization of flue or process gases. Such gases containing sulphur in the form of sulphur dioxide or other oxide species must first be treated prior to venting to minimize harmful effects on the environment prior to release. In common practise treatment may be performed in wet or dry scrubbers. In these cases the solid contact medium may be lime or hydrated lime or zonc oxide. Reduction of the diffusion layer around the particles would increase the level of reaction rate and efficiencies.

## Claims

1. A process of scrubbing a gaseous component from a gas stream (21), comprising the steps of providing a high velocity gas stream (21) to a reaction zone (22), said gas stream (21) entering from beneath said reaction zone (22), contacting said high velocity gas stream (21) in said reaction zone (22) with a particulate material capable of adsorbing or chemisorbing the gaseous component, said particulate material entering said reaction zone in a direction such that the particulate material has a downward component of velocity, removing and recovering a coarse fraction of the particulate material from the reaction zone (22) and elutriating a fine fraction of the particulate material from the coarse fraction of the particulate material by the gas stream, the fine fraction being entrained in the gas stream and exiting the reaction zone with the gas stream and the fine fraction then being recovered from the gas stream to thereby separate the fine fraction from the coarse fraction, characterized in that the reaction zone is toroidal and the gas stream entering the reaction zone is imparted with an upward circumferential motion, such that the slip velocity in the reaction zone (22) of the gas stream relative to the particulate material is greater than 1 metre per second.

2. The process in accordance with claim 1 wherein the slip velocity in the reaction zone (22) of the gas stream (21) relative to the particulate material is greater than 4 m/s.

3. The process in accordance with claim 2 wherein the slip velocity in the reaction zone (22) of the gas stream (21) relative to the particulate material is less than 5 m/s.

4. The process in accordance with any preceding claim wherein the adsorption or chemisorption of the gaseous component from the gas stream (21) onto said particulate material has substantially reached equilibrium prior to the particulate material exiting the reaction zone (22).

5. The process in accordance with any preceding claim wherein the particulate material is alumina and the gaseous component is a gaseous fluoride.

6. The process in accordance with claim 5 wherein the particle size of the fine fraction is less than about 45 micrometers.

7. The process in accordance with claim 5 wherein the particle size of the fine fraction is less than about 20 micrometers.

8. The process in accordance with claim 5 wherein the particle size of the fine fraction is less than about 10 micrometers.

9. A process according to any of claims 5 to 8, wherein the gas stream is an exhaust gas stream.

10. The process in accordance with claim 9 wherein the exhaust gas stream is from an aluminium refining or smelting operation.

11. The process in accordance with claim 9 or 10 wherein the recovered coarse fraction of particulate alumina is used as primary feed to an aluminium smelting cell.

12. A process accordingly to any preceding claim, wherein the coarse fraction of particulate material is removed axially downwardly from the reaction zone.

## Patentansprüche

1. Verfahren für die Auswaschung einer gasförmigen Komponente aus einem Gasstrom (21), bei dem ein mit hoher Geschwindigkeit fließender Gasstrom (21) an eine Reaktionszone (22) geleitet wird, wobei dieser Gasstrom (21) von der Unterseite in diese Reaktionszone (22) eingeleitet wird und der mit hoher Geschwindigkeit fließende Gasstrom (21) in der Reaktionszone (22) mit einem partikelförmigen Material kontaktiert wird, welches in der Lage ist, die gasförmige Komponente zu adsorbieren oder zu chemisorbieren, wobei dieses partikelförmigen Material in diese Reaktionszone in einer Richtung so eingeleitet wird, daß das partikelförmigen Material eine nach unten gerichtete Geschwindigkeitskomponente hat, und bei dem eine grobe Fraktion des partikelförmigen Materials aus der Reaktionszone (22) entfernt und zurückgewonnen wird, sowie eine feine Fraktion des partikelförmigen Materials mit Hilfe des Gasstroms aus der groben Fraktion des partikelförmigen Materials ausgeschlämmt wird, und die feine Fraktion in dem Gasstrom mitgeschleppt wird und die Reaktionszone über den Gasstrom erregt, wonach diese feine Fraktion dann aus dem Gasstrom zurückgewonnen wird, um auf diese Weise diese feine Fraktion von der groben Fraktion zu trennen,
**dadurch gekennzeichnet**, **daß**
die Raktionszone torusförmig ausgestaltet ist und der in die Reaktionszone einfließende Gasstrom mit einer nach oben gerichteteten Umfangsbewegung beaufschlagt wird, so daß die Schlupfgeschwindigkeit dieses Gasstroms gegenüber dem partikelförmigen Material größer als 1 Meter pro Sekunde ist.

2. Verfahren nach Anspruch 1,
**dadurch gekennzeichnet**, **daß**
die Schlupfgeschwindigkeit des Gasstroms (21) in der Reaktionszone (22) gegenüber dem partikelförmigen Material größer als 4 m/s ist.

3. Verfahren nach Anspruch 2,
**dadurch gekennzeichnet**, **daß**
die Schlupfgeschwindigkeit des Gasstroms (21) in der Reaktionszone (22) gegenüber dem partikelförmigen Material kleiner als 5 m/s ist.

4. Verfahren nach einem der vorausgegangenen Ansprüche,
**dadurch gekennzeichnet**, **daß**
die Adsorption oder Chemisorption der gasförmigen Komponente aus dem Gasstrom (21) auf das partikelförmige Material weitgehend ein Gleichgewicht erreicht hat, bevor das partikelförmigen Material die Reaktionszone (22) in Erregung versetzt.

5. Verfahren nach einem der vorausgegangenen Ansprüche,
**dadurch gekennzeichnet**, **daß**
das partikelförmige Material aus Aluminiumoxiden besteht und daß die gasförmige Komponente aus einem gasförmigen Fluorid besteht.

6. Verfahren nach Anspruch 5,
**dadurch gekennzeichnet**, **daß**
die Größe der Partikel der feinen Fraktion weniger als etwa 45 µm beträgt.

7. Verfahren nach Anspruch 5,
**dadurch gekennzeichnet**, **daß**
die Größe der Partikel der feinen Fraktion weniger als etwa 20 µm beträgt.

8. Verfahren nach Anspruch 5,
**dadurch gekennzeichnet**, **daß**
die Größe der Partikel der feinen Fraktion weniger als etwa 10 µm beträgt.

9. Verfahren nach einem der Ansprüche 5 bis 8,
**dadurch gekennzeichnet**, **daß**
der Gasstrom ein Abgasstrom ist.

10. Verfahren nach Anspruch 9,
**dadurch gekennzeichnet**, **daß**
der Abgasstrom aus der Raffination oder Schmelzung von Aluminium stammt.

11. Verfahren nach einem der Ansprüche 9 oder 10,
**dadurch gekennzeichnet**, **daß**
die zurückgewonnene grobe Fraktion der Aluminiumoxidpartikel als primäre Beschickung für einen Tiegel für die Schmelzung von Aluminium verwendet wird.

12. Verfahren nach einem der vorausgegangenen Ansprüche,
**dadurch gekennzeichnet**, **daß**
die grobe Fraktion des partikelförmigen Materials in axialer Richtung nach unten aus der Reaktionszone entfernt wird.

## Revendications

1. Procédé de lavage d'un composant gazeux dans un flux de gaz (21), comprenant les étapes consistant à acheminer un flux de gaz à vitesse élevée (21) vers une zone de réaction (22), ledit flux de gaz (21) pénétrant dans ladite zone de réaction (22) par en-dessous, mettre en contact ledit flux de gaz à vitesse élevée (21) dans ladite zone de réaction (22) avec un matériau particulaire capable d'adsorber ou de chimisorber le composant, ledit matériau particulaire pénétrant dans ladite zone de réaction dans une direction telle que le matériau particulaire présente une composante descendante de vitesse, pour éliminer et récupérer une fraction grossière du matériau particulaire à partir de la zone de réaction (22), et décanter une fraction fine du matériau particulaire à partir de la fraction grossière du matériau particulaire au moyen du flux de gaz, ladite fraction fine étant entraînée dans le flux de gaz et sortant de la zone de réaction avec le flux de gaz, et ladite fraction fine étant ensuite récupérée dans le flux de gaz afin de séparer ainsi la fraction fine de la fraction grossière, caractérisé en ce que la zone de réaction est toroïdale, et qu'un mouvement circonférentiel dirigé vers le haut est communiqué au flux de gaz pénétrant dans la zone de réaction, de telle sorte que la vitesse de glissement dans la zone de réaction (22) du flux de gaz par rapport au matériau particulaire soit supérieure à 1 mètre par seconde.

2. Procédé selon la revendication 1, dans lequel la vitesse de glissement dans la zone de réaction (22) du flux de gaz (21) par rapport au matériau particulaire est supérieure à 4 m/s.

3. Procédé selon la revendication 2, dans lequel la vitesse de glissement dans la zone de réaction (22) du flux de gaz (21) par rapport au matériau particulaire est inférieure à 5 m/s.

4. Procédé selon l'une quelconque des revendications précédentes, dans lequel l'adsorption ou la chimisorption du composant gazeux à partir du flux de gaz (21) sur ledit matériau particulaire a substantiellement atteint un équilibre avant que le matériau particulaire sorte de la zone de réaction (22).

5. Procédé selon l'une quelconque des revendications précédentes, dans lequel le matériau particulaire est de l'oxyde d'aluminium et le composant gazeux est un fluorure gazeux.

6. Procédé selon la revendication 5, dans lequel la granulométrie de la fraction fine est inférieure à 45 micromètres environ.

7. Procédé selon la revendication 5, dans lequel la granulométrie de la fraction fine est inférieure à 20 micromètres environ.

8. Procédé selon la revendication 5, dans lequel la granulométrie de la fraction fine est inférieure à 10 micromètres environ.

9. Procédé selon l'une quelconque des revendications 5, à 8, dans lequel le flux de gaz est un flux de gaz d'échappement.

10. Procédé selon la revendication 9, dans lequel le flux de gaz d'échappement provient d'une opération d'affinage ou de fusion d'aluminium.

11. Procédé selon la revendication 9 ou la revendication 10, dans lequel la fraction grossière récupérée de l'oxyde d'aluminium particulaire est utilisée comme charge primaire dans une cellule de fusion d'aluminium.

12. Procédé selon l'une quelconque des revendications précédentes, dans lequel la fraction grossière du matériau particulaire est éliminée de la zone de réaction axialement et vers le bas.
